# EUROPÄISCHE PATENTSCHRIFT

(11) **EP 1 388 363 B1**
(45) Veröffentlichungstag und Bekanntmachung des Hinweises auf die Patenterteilung: **21.07.2010**
(21) Anmeldenummer: 03017070.8
(22) Anmeldetag: 28.07.2003
(51) Int. Cl.: B01D 53/84, B01D 53/85

(54) **Verfahren zum Reiningen von Abluft**
Process for purifying waste gas
Procédé de purufication des gaz d'échappement

(30) Priorität: 05.08.2002 DE 10235839
(43) Veröffentlichungstag der Anmeldung: 11.02.2004
(60) Teilanmeldung: 09013442.0
(73) Patentinhaber: Firma Störk-Küfers Inhaber: Hans Störk e. k., 78576 Emmingen-Liptingen (DE)
(72) Erfinder: Störk, Hans, 78576 Emmingen-Liptingen (DE)
(74) Vertreter: Weiss, Peter

(56) Entgegenhaltungen:
- DE-A- 4 026 320
- DE-C- 19 608 834
- DE-U1- 8 601 761
- DE-U1- 9 301 464
- US-A- 5 656 494
- US-A- 5 747 331
- US-A- 5 891 711
- US-B1- 6 271 020
- "Flüchtige organische Verbindungen"[Online] 17. Juni 2009 (2009-06-17), Seiten 1-5, Gefunden im Internet: URL:http://de.wikipedia.org/wiki/F1%C3%BCc htige_organische_Verbindungen>
- "Riechstoff"[Online] 10. September 2009 (2009-09-10), Seite 1, Gefunden im Internet: URL:http://de.wikipedia.org/wiki/Riechstof f>
- "Biologische Abgasreinigung Biofilter" VDI-RICHTLINIEN, Nr. 3477, November 2004 (2004-11), Seite 1-3,21,22,

## Beschreibung

Die Erfindung betrifft ein Verfahren zum Reinigen von Abluft mit einem Filter, in dem sich biologisches Material, mit Bakterien, befindet, welche Geruchsstoffe aus der Abluft binden.

Aus der US-A 5 656 494 ist ein Biofilter zum Entfernen von Verunreinigungen aus einem Gasstrom bekannt. Dabei wird das kontaminierte Gas mittels eines Gebläses angesaugt. Ein Feuchtigkeitsseparator entzieht dann dem Gasstrom die Feuchtigkeit, bevor dieser in das Gebläse eintritt. Anschliessend wird der Gasstrom durch einen Befeuchter geführt, in welchem Temperatur und Feuchtigkeit des Gasströms eingestellt werden. Erst dann gelangt der Gasstrom in den Biofilter.

Desweiteren ist aus der US-A 5 891 711 eine Anlage mit einem Biofilter bekannt, wobei dem Biofilter ein Tank mit einer Wasserschicht vorgeschaltet ist. Das durch den Biofilter zu reinigende Gas wird durch das Wasser in feinen Blasen gedrückt, wodurch eine Befeuchtung der trockenen Luft auf bis zu 100%- realitive Luftfeuchtigkeit stattfindet.

Aus der DE G 86 01 7611 U1 odor der DE 93 01 464 U1 ist beispielsweise ein Desodorierungsfilter zum Einsetzen in einen Kanalschacht eines Kanalsystems bekannt. In einem derartigen Desodorierungsfilter kann sich laut DE 686017611 U1 eine Schicht aus Naturfasern; wie beispielsweise Torf oder Kokosfasern, befinden die mit entsprechenden Bakterien geimpft sind. Diese Bakterien nehmen der Abluft den unangenehmen Geruch. Dies ist aber nur ein Beispiel, Biofilter werden in einer Vielzahl von anderen Fällen zur Reinigung von gasförmigen Medien eingesetzt.

Die zu reinigende Abluft ist in vielen Fällen sehr aggressiv, so dass der Biofilter bzw. die sich in ihm befindlichen Bakterien erheblichen Belastungen ausgesetzt sind und sogar teilweise zerstört werden können.

Der vorliegenden Erfindung liegt die Aufgabe zugrunde, ein Verfahren der o.g. Art zu schaffen, mit dem die Arbeitsweise des Biofilters wesentlich verbessert wird.

Zur Lösung der Aufgabe führt ein Verfahren nach dem kennzeichnenden Teil von Anspruch 1.

Bei den Stoffen, die für die Bakterien im Biofilter schädlich sind, handelt es sich insbesondere um Schwefelwasserstoff und Ammoniak. Insbesondere der Schwefelwasserstoff in der Abluft schädigt die Bakterien im Biofilter erheblich, so dass der Biofilter häufig ausgetauscht werden muss.

Der Schwefelwasserstoff hat auch den Nachteil, dass der pH-Wert der Abluft erheblich abgesenkt wird. Das bedeutet, dass die Abluft sauer ist, was eben, wie oben erwähnt, für die Bakterien sehr schlecht ist. Je höher der pH-Wert der Abluft ist, desto besser ist dies für den Biofilter. Es wurde beispielsweise festgestellt, dass die Abluft beim Eintritt in den Reaktor einen pH-Wert von etwa 1, beim Austritt aber einen pH-Wert von etwa 4 hatte.

Zur Bildung und Unterhaltung des biologischen Rasens wird die Körnung mit einer Flüssigkeit, insbesondere mit Wasser, benetzt.

Die Körnung in dem Reaktor besteht bevorzugt aus Material mit einer grossen Oberfläche, wie beispielsweise Lava, Blähton, Bims od. dgl. Dies gewährleistet, dass ein gebildeter biologischer Rasen eine grosse Oberfläche zur Aufnahme von Stoffen aus der Abluft, die für die Bakterien in dem Filter schädlich sind, aufweist.

Bevorzugt wird die Abluft durch den Filter gesaugt. Das bedeutet, dass im Filter selbst ein gewisses Vakuum entsteht, wodurch gewährleistet wird, dass die zu reinigende Abluft durch keine undichte Stelle nach aussen in die Umwelt gelangt. Hierdurch wird die Arbeit des Biofilters wesentlich verbessert und die Umwelt geschont.

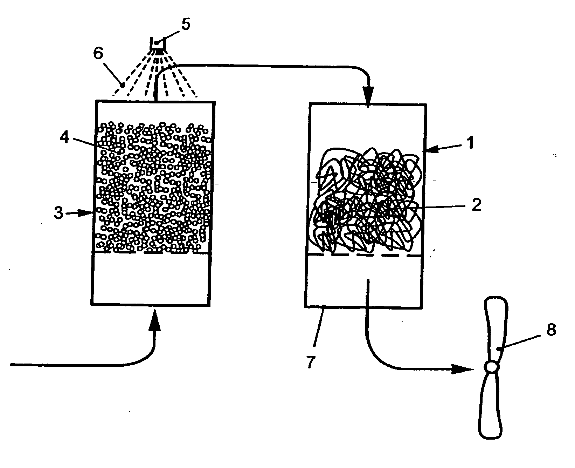

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in ihrer einzigen Figur eine schematische Darstellung einer Vorrichtung zum Reinigen von Abluft.

Diese Vorrichtung zum Reinigen von Abluft weist einen Biofilter 1 auf, in dem sich biologisches Material 2, beispielsweise Naturfasern, wie Torf oder Kokosfaser, befindet, das mit entsprechenden Bakterien geimpft ist, welche der Abluft den unangenehmen Geruch nehmen.

Diesem Biofilter 1 ist ein Reaktor 3 vorgeschaltet, in welchem sich eine Körnung 4 befindet. Diese Körnung 4 kann beispielsweise aus Lava, Blähton oder Bimsstein oder einer Mischung aus diesen bestehen.

Dem Reaktor 3 ist eine Sprüheinrichtung 5 zum Abgeben einer Flüssigkeit 6 zugeordnet. Die Flüssigkeit 6 ist beispielsweise Wasser. Falls es notwendig ist, auch das biologische Material 2 zu benetzen, kann die Sprüheinrichtung 5 ebenfalls dem Biofilter 1 zugeordnet werden.

Einem Filterausgang 7 ist zudem eine Saugeinrichtung 8 zugeordnet, die beispielsweise aus einem einfachen Ventilator bestehen kann.

Die Funktionsweise der vorliegenden Erfindung ist folgende:

Die zu reinigende Abluft gelangt, wie durch Pfeile dargestellt, in den Reaktor 3 und durchströmt die Körnung 4. Auf dieser Körnung 4 bildet sich im Laufe der Zeit infolge der Flüssigkeitszugabe und der Durchströmung der Abluft ein biologischer Rasen, welcher aus Mikroorganismen besteht, die insbesondere den Schwefelwasserstoff und ggf. das Ammoniak aus der Abluft binden. Das bedeutet, dass die in den Biofilter 1 übertretende Abluft von diesen Stoffen, die für die Bakterien in dem Filter 1 schädlich sind, gereinigt ist und diese Stoffe, die für die Bakterien in dem Filter 1 schädlich sind, den Biofilter 1 nicht mehr zerstören können. Es wurde festgestellt, dass die Abluft beim Eintritt in den Reaktor einen wesentlich niedrigeren pH-Wert aufweist, als beim Austritt aus dem Reaktor. D.h., die Abluft, die in den Biofilter 1 übergeführt wird, besitzt einen wesentlich höheren pH-Wert als beim Eintritt in den Reaktor, so dass es zu einer vernachlässigbaren Beeinträchtigung der Bakterien im Biofilter 1 kommt.

Bevorzugt, soll die Abluft durch den Biofilter 1 und, in einem bevorzugten Ausführungsbeispiel, auch durch den Reaktor 3 gesaugt werden. Dadurch wird vermieden, dass Abluft aus irgendwelchen Ritzen oder undichten Stellen des Biofilters bzw. Reaktors austritt. Durch die Saugleistung wird in dem Biofilter 1 bzw. Reaktor 3 ein Vakuum erzeugt, so dass durch undichte Stellen höchstens von aussen Luft angesaugt wird, jedoch in keinem Fall Abluft in die Umwelt gelangt. Hierdurch wird die Leistung der gesamten Einrichtung wesentlich verbessert.

**Positionszahlenliste**

| | | | | | |
|---|---|---|---|---|---|
| 1 | Biofilter | 34 | | 67 | |
| 2 | biologisches Material | 35 | | 68 | |
| 3 | Reaktor | 36 | | 69 | |
| 4 | Körnung | 37 | | 70 | |
| 5 | Sprüheinrichtung | 38 | | 71 | |
| 6 | Flüssigkeit | 39 | | 72 | |
| 7 | Filterausgang | 40 | | 73 | |
| 8 | Saugeinrichtung | 41 | | 74 | |
| 9 | | 42 | | 75 | |
| 10 | | 43 | | 76 | |
| 11 | | 44 | | 77 | |
| 12 | | 45 | | 78 | |
| 13 | | 46 | | 79 | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Reinigen von Abluft mit einem Filter (1), in dem sich biologisches Material (2) mit Bakterien befindet, welche Geruchsstoffe aus der Abluft binden.
**dadurch gekennzeichnet,**
**dass** die Abluft vor dem Filter (1) durch einen Reaktor (3) geführt wird, in dem sich eine kornung (4) befindet, auf der sich im Laufe der Zeit infolge Flüssigkeitszugabe und der Durchstromung der Abluft ein biologischer Rasen bildet, welcher aus Mikroorganismen besteht, die Stoffe, die für die Bakterien in dem Filter (1) schädlich sind, aus der Abluft binden.

2. Verfahren nach Anspruch 1, **dadurch gekennzeichnet, dass** die Abluft durch den Filter (1) gesaugt wird.

3. Verfahren nach Anspruch 1, **dadurch gekennzeichnet, dass** die Körnung (4) aus Lava, Blähton, Bims bzw. einer Mischung aus diesen besteht.

4. Verfahren nach einem der Ansprüche 1 bis 3, **dadurch gekennzeichnet, dass** der pH-Wert der Abluft nahe dem Eintritt in und/oder nahe dem Austritt aus dem Reaktor (3) ermittelt wird.

## Claims

1. Process for purifying waste air using a filter (1) containing biological material (2) with bacteria which bind odorous substances from the waste air,
**characterised**
**in that** the waste air is passed, upstream of the filter (1), through a reactor (3) containing a granulation (4), on which, over time, a biological lawn forms owing to the addition of liquid and the through-flow of the waste air, the lawn comprising microorganisms which bind, from the waste air, substances harmful to the bacteria in the filter (1).

2. Process according to Claim 1, **characterised in that** the waste air is sucked through the filter (1).

3. Process according to Claim 1, **characterised in that** the granulation (4) comprises lava, swelling clay, pumice or a mixture thereof.

4. Process according to one of Claims 1 to 3, **characterised in that** the pH value of the waste air is determined close to the entry into and/or close to the exit from the reactor (3).

## Revendications

1. Procédé de purification de gaz d'échappement par un filtre (1) dans lequel se trouve un matériau biologique (2) avec des bactéries qui éliminent par liaison les substances odorantes des gaz d'échappement,
**caractérisé par le fait que**
les gaz d'échappement sont guidés, avant le filtre (1), à travers un réacteur (3) dans lequel se trouve une granulation (4) sur laquelle se forme au cours du temps, par suite de l'addition de liquide et du passage des gaz d'échappement, une pellicule biologique composée de micro-organismes qui éliminent par liaison les matières qui sont nuisibles pour les bactéries dans le filtre.

2. Procédé selon la revendication 1, **caractérisé par le fait que** les gaz d'échappement sont aspirés à travers le filtre (1).

3. Procédé selon la revendication 1, **caractérisé par le fait que** la granulation (4) se compose de lave, d'argile expansée, de pierre ponce ou d'un mélange de ces derniers.

4. Procédé selon l'une des revendications 1 à 3, **caractérisé par le fait qu'**il est déterminé la valeur de pH des gaz d'échappement près de l'entrée dans et/ou près de la sortie du réacteur (3).
